# EUROPÄISCHE PATENTSCHRIFT

(11) **EP 1 226 052 B1**
(45) Veröffentlichungstag und Bekanntmachung des Hinweises auf die Patenterteilung: **07.06.2006**
(21) Anmeldenummer: 01953870.1
(22) Anmeldetag: 05.07.2001
(51) Int. Cl.: B60S 1/34

(54) **WISCHANLAGE**
WIPER SYSTEM
SYSTEME D'ESSUIE-GLACE

(30) Priorität: 13.07.2000 DE 10034042
(43) Veröffentlichungstag der Anmeldung: 31.07.2002
(73) Patentinhaber: ROBERT BOSCH GMBH, 70442 Stuttgart (DE)
(72) Erfinder: ZIMMER, Joachim, 77880 Sasbach (DE)
(86) Internationale Anmeldenummer: PCT/DE2001/002495
(87) Internationale Veröffentlichungsnummer: WO 2002/006098

(56) Entgegenhaltungen:
- DE-A- 3 313 057
- GB-A- 1 448 892
- GB-A- 1 580 926

## Beschreibung

Die Erfindung betrifft eine Wischanlage zum Wischen einer, insbesondere an einem Kraftfahrzeug, bewegbaren Scheibe gemäß dem Oberbegriff des Anspruchs 1.

Eine derartige Wischanlage ist beispielsweise aus der GB-A-1 448 892 bekannt. Nachteilig bei dieser bekannten Wischanlage ist, dass diese äußerst aufwendig in der Fertigung ist. Eine Schraubenfeder ist vorgesehen, um die beiden Kupplungs-Teile in der Schließ-Stellung der Scheibe aneinander zu drücken.

Auch aus der GB-A-1 580 926 ist eine Scheibenwischanlage bekannt, die zwei Kupplungs-Teile aufweist. Eine Schraubenfeder findet wieder Anwendung, um die beiden Kupplungs-Teile in der Schließ-Stellung der Scheibe im Eingriff miteinander zu halten. Auch diese Scheibenwischanlage ist nicht kostengünstig herstellbar.

Aus der DE-A-33 13 057 ist eine Wischanlage für Scheiben bekannt. Bei dieser ist der Wischarm einschließlich der zugehörigen Lagerung an einer verschwenkbaren Scheibe befestigt. Die Motor-Getriebe-Einheit ist stationär mit der Karosserie verbunden. Zur Zentrierung ist karosserieseitig ein Zentrierzapfen vorgesehen, der mit einem scheibenseitig angeordneten Mitnehmer mit Zentrier-Vertiefung in Eingriff bringbar ist. Exzentrisch zu diesem ist karosserieseitig am Ende eines drehantreibbaren Arms ein entgegen einer Federkraft einschiebbarer Zapfen vorgesehen, der mit einer in dem Mitnehmer angeordneten Aufnahmebohrung zur Drehmomentübertragung in Eingriff bringbar ist. Nachteilig an dieser Anordnung ist, dass axiale und radiale Toleranzen nicht ausgeglichen werden können. Darüber hinaus kommt es zwischen den aus Metall bestehenden, gegeneinander bewegten Teile zu Schabgeräuschen und erhöhter Korrosion.

Der Erfindung liegt die Aufgabe zugrunde, eine Wischanlage zum Wischen einer bewegbaren Scheibe zu schaffen, bei der Schwankungen der Abmessungen möglichst einfach ausgeglichen werden können. Die Wischanlage soll außerdem äußerst kostengünstig herstellbar sein.

Die Aufgabe wird durch die im Kennzeichnungsteil des Anspruchs 1 angegebenen Merkmale gelöst. Der Kern der Erfindung besteht darin, zumindest eines der beiden miteinander zur Drehmomentübertragung in Eingriff bringbaren Kupplungs-Teile elastisch auszugestalten, so dass Fertigungstoleranzen oder Abmessungsschwankungen bei der Betätigung der Wischanlage oder bei dem Verschwenken der Scheibe ausgeglichen werden können. Die Zentrier-Einrichtung besteht aus Kunststoff, da bestimmte Kunststoffe Eigenschaften wie Flexibilität und Elastizität besitzen, die metallische Werkstoffe nicht haben. Durch den Zentrier-Aufsatz mit mittiger Zentrier-Aufnahme ist eine konstruktiv einfache Möglichkeit geschaffen, um die Wischer-Welle im Bezug auf die Antriebs-Welle zu zentrieren und radial zu führen. Da die Zentrier-Aufnahme über einen einteilig mit dieser ausgebildeten federnden Ring auf der Antriebs-Scheibe abgestützt ist, können axiale Schwankungen der Schließbildung der Scheibe ausgeglichen werden.

Die Herstellung der Einheit aus Antriebs-Scheibe und Zentrier-Aufsatz als Zwei-Komponenten-Spritzgußteil gemäß dem Anspruch 2 ist besonders einfach und das Produkt korrosionsresistent.

Die innenseitige Auskleidung des Fanglochs mit Kunststoff gemäß den Ansprüchen 3 und 4 reduziert die sonst entstehenden Schabgeräusche zwischen dem Rastbolzen und der Fangloch-Wand.

Zusätzliche Vorteile und Einzelheiten der Erfindung ergeben sich aus der Beschreibung eines Ausführungsbeispiels anhand der Zeichnungen. Es zeigen
- Fig. 1: eine schematische Querschnittsdarstellung einer nicht erfindundsgemäß ausgebildeten Wischanlage in der Öffnungsstellung,
- Fig. 2: eine Darstellung gemäß Figur 1 in der Schließstellung,
- Fig. 3: eine schematische Querschnittsdarstellung einer Wischanlage gemäß einer Ausführungsform der Erfindung in der Öffnungsstellung,
- Fig. 4: eine Darstellung gemäß Figur 3 in einer intermediären Stellung, und
- Fig. 5: eine Darstellung gemäß Figur 3 in der Schließstellung.

Ein Kraftfahrzeug weist im Heckbereich eine entlang einer Schwenk-Richtung 1 verschwenkbare Scheibe 2 mit einer Wischanlage auf. Die Außenseite 3 der Scheibe 2 wird von einem mit einer Wischer-Welle 4 verbundenen, nicht dargestellten Wischer überstrichen. Die Wischer-Welle 4 ist in einer im wesentlichen ringzylindrischen Lager-Hülse 5 um die Achse 6 drehbar gelagert. Die Lager-Hülse 5 ist in bekannter Weise durch ein Befestigungs-Element 7 mit der Scheibe 2 verbunden, wobei die Einheit aus Wischer-Welle 4 und Lager-Hülse 5 durch eine Ausnehmung 8 in der Scheibe 2 geführt ist. Am innenseitigen Ende der Wischer-Welle 4 ist ein Kupplungs-Teil 9 befestigt. Zum Antrieb der Wischer-Welle 4 ist eine herkömmliche Motor-Getriebe-Einheit 10 mit einem Getriebe 11 und einem dem Getriebe vorgeordneten Motor 12 vorgesehen, wobei die Motor-Getriebe-Einheit 10 mit der Karosserie des Kraftfahrzeugs fest verbunden ist. Die Motor-Getriebe-Einheit 10 treibt eine über diese zum Teil hervorstehende Antriebs-Welle 13 an, die in einem Lager 14 gelagert ist. Das freie Ende der Antriebs-Welle 13 ist mit einem Kupplungs-Teil 15 verbunden. Das Kupplungs-Teil 15 ist mit dem Kupplungs-Teil 9 in drehmomentübernagender Weise in Eingriff bringbar.

Das Kupplungs-Teil 15 weist eine im wesentliche kreisförmige Antriebs-Scheibe 16 auf, die mittig mit einer Bohrung 17 versehen ist, die das freie Ende der Antriebs-Welle 13 aufnimmt, wobei die Antriebs-Welle 13 mit der Antriebs-Scheibe 16 fest verbunden, z. B. verschweißt oder ringverstemmt, ist. Es ist möglich, die Antriebs-Scheibe 16 zur Erhöhung der Flexibilität geschlitzt auszubilden. Das freie Ende 18 der Antriebs-Welle 13 fluchtet mit der Oberseite 19 der Antriebs-Scheibe 16. Die Antriebs-Scheibe 16 weist exzentrisch zu ihrer Mittel-Längs-Achse 20, um die auch die Antriebs-Welle 13 drehbar ist, ein die Scheibe 16 durchdringendes Fangloch 21 auf. Das Fangloch 21 verläuft parallel zur Mittel-Längs-Achse 20. Auf der Oberseite der Antriebs-Scheibe 16 ist ein Zentrier-Aufsatz 22 angeordnet, der aus einem ringförmigen, die Antriebs-Scheibe 16 flächig bedeckenden Teil 23, einem einteilig damit ausgebildeten, den Rand der Antriebs-Scheibe 16 umgreifenden Seitensteg 24 sowie einer mittig angeordneten, mit dem Teil 23 einteilig ausgebildeten Zentrier-Aufnahme 25 besteht. Die Zentrier-Aufnahme 25 weist einen ringförmigen, gegenüber dem Teil 23 in axialer Richtung vorstehenden Ring 26 auf, dessen Innendurchmesser dem Außendurchmesser des Wellen-Endes 27 der Wischer-Welle 4 ggf. mit einem vorgegebenen Spiel entspricht. Es ist möglich, das Wellen-Ende 27 abgefast oder mit leichtem Konus auszubilden, wobei dann die Einführung des Wellen-Endes 27 in die Zentrier-Aufnahme 25 erleichtert wird. Der Zentrier-Aufsatz 22 weist einen Ring-Abschnitt 28 auf, der die Innenwand des Fangloches 21 bedeckt. Der Zentrier-Aufsatz 22 22 besteht aus einem flexiblen, elastischen Kunststoff. Als Kunststoff kommt insbesondere POM, nämlich Polyoxymethylen, in Frage, da dieser Werkstoff eine ausreichende Elastizität und gute Steifigkeit aufweist. Gleichzeitig ist der Werkstoff UV-beständig und kann mit guter Oberflächenqualität auch für für den Benutzer sichtbare Teile verwendet werden. Der Zentrier-Aufsatz 22 ist auf die in der Regel aus Stahl bestehende Antriebs-Scheibe 16 aufgerastet, so daß bisherige im Stand der Technik bekannte Antriebs-Scheiben 16 weiter verwendet werden können. Es ist auch möglich, die Einheit aus Antriebs-Scheibe 16 und Zentrier-Aufsatz 22 im Zwei-Komponenten-Spritzgußverfahren aus zwei verschiedenen Kunststoffen herzustellen, wobei für die Antriebs-Scheibe 16 ein fester und zäher Kunststoff und für den Zentrier-Aufsatz 22 ein flexiblerer Kunststoff gewählt wird.

Das Kupplungs-Teil 9 weist einen mit der Wischer-Welle 4 fest verbundenen Tragarm 29 auf, der sich im wesentlichen senkrecht zur Achse 6 erstreckt. Im Bereich des freien Endes des Tragarms 29 ist ein sich im wesentlichen parallel zur Achse 6 erstreckender Rastbolzen 30 angeordnet, der in einer Lagerbuchse 31, welche ihrerseits in einer Bohrung 32 im Tragarm 29 festgelegt ist, verschiebbar geführt ist. Das der Scheibe 2 zugewandte Ende des Rastbolzens 30 ist von einem mit der Lagerbuchse 31 verbundenen Gehäuse 33 umgeben, in dem eine Spiralfeder 34 angeordnet ist. Die Spiralfeder 34 ist zum einen gegenüber dem Boden 35 des Gehäuses 33 und zum anderen gegenüber einem mit dem Rastbolzen 30 verbundenen Anlagering 36 abgestützt, so daß der Rastbolzen 30 entgegen der Federkraft der Spiralfeder 34 in das Gehäuse 33 einschiebbar ist. Am der Antriebs-Scheibe 16 zugewandten Ende des Rastbolzens 30 weist dieser Rastvorsprung 37 auf, der vor allem hinsichtlich seines Durchmessers so dimensioniert ist, daß er mit dem Fangloch 21 in Eingriff bringbar ist.

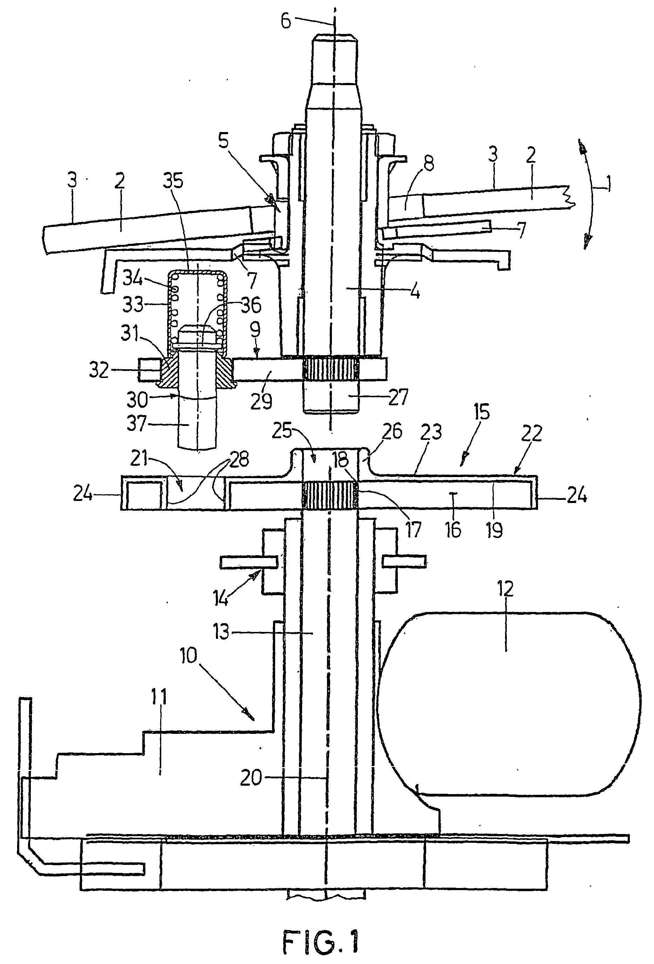

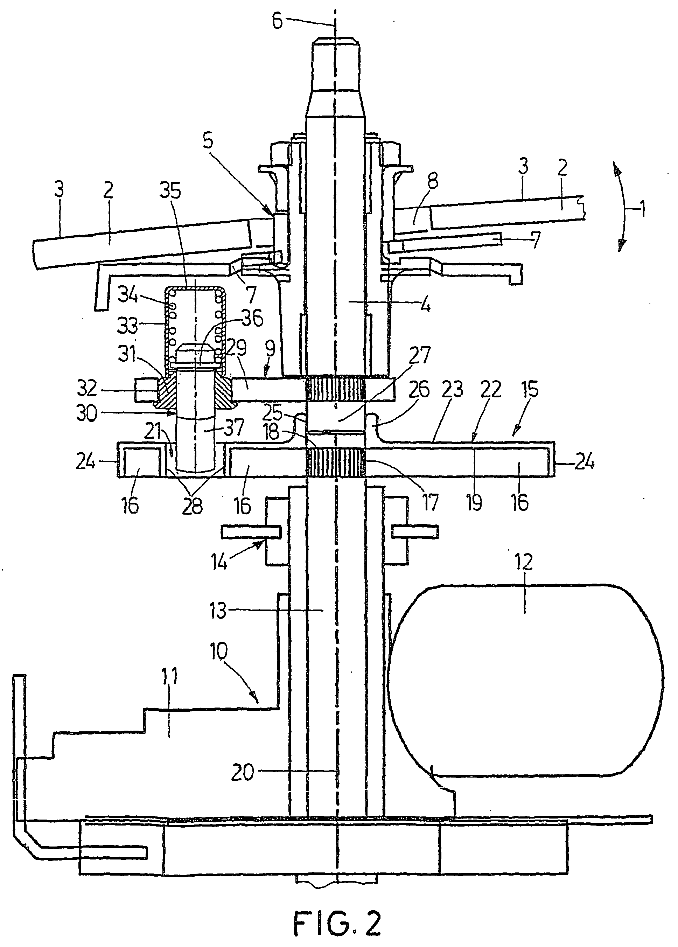

Im folgenden wird die Funktion der Wischanlage beschrieben. Wird die Scheibe 2 aus der in Figur 1 dargestellten Öffnungsstellung in die in Figur 2 dargestellte Schließstellung verschwenkt, so gelangt das Wellen-Ende 27 in Eingriff mit der Zentrier-Aufnahme 25, wodurch die Wischer-Welle 4 in bezug auf die Antriebs-Welle 13 zentriert wird. Durch den Eingriff des Wellen-Endes 27 in die Zentrier-Aufnahme 25 entsteht eine radiale Zwangsführung zwischen der Antriebs-Welle 13 und der Wischer-Welle 4. Durch die elastische Ausgestaltung des Zentrier-Aufsatzes 22 und insbesondere des Rings 26 können Fertigungsungenauigkeiten ausgeglichen werden. In der Schließstellung besteht in radialer Richtung eine formschlüssige Verbindung zwischen dem Wellen-Ende 27 und der Zentrier-Aufnahme 25. Es ist möglich, das Wellen-Ende 27 weiter, als in Figur 2 dargestellt, in die Zentrier-Aufnahme 25 einzuführen, bis das Wellen-Ende 27 in Anschlag mit dem Ende 18 der Antriebs-Welle 13 gelangt. Für das Eingreifen des Rastvorsprungs 37 in das Fangloch 21 gibt es grundsätzlich zwei Möglichkeiten. Befindet sich der Rastbolzen 30 bei Schließen der Scheibe 2 oberhalb des Fangloches 21, so kommt dieser unmittelbar mit dem Fangloch 21 in Eingriff, so daß über den Rastbolzen 31 Drehmomente von der Antriebs-Scheibe 16 auf die Wischer-Welle 4 übertragen werden können. Befindet sich der Rastbolzen 30 nicht oberhalb des Fanglochs 21, so wird beim Schließen der Scheibe 2 der Rastbolzen 30 in das Gehäuse 33 eingeschoben, wobei der Rastvorsprung 37 auf dem Teil 23 des Zentrier-Aufsatzes 22 aufliegt. Wird anschließend die Wischanlage in Betrieb gesetzt, so dreht sich die Antriebs-Scheibe 16, wobei der Rastvorsprung 37 auf dem Zentrier-Aufsatz 22 gleitet. Da der Zentrier-Aufsatz 22 aus Kunststoff besteht, entstehen keine unangenehmen Schabgeräusche, die anderenfalls durch das Schaben des Rastvorsprungs 37 auf der aus Stahl bestehenden Antriebs-Scheibe 16 entstünden. Darüber hinaus wird die infolge des Schabens sonst entstehende Korrosion verhindert. Ferner wird durch den Zentrier-Aufsatz 22 allgemein die Korrosionsanfälligkeit der Antriebs-Scheibe 16 reduziert, da sie zumindest halbseitig von Kunststoff überzogen ist. Es ist auch möglich, die Antriebs-Scheibe 16 allseitig mit Kunststoff unter Bildung des Zentrier-Aufsatzes 22 auf der Oberseite zu umspritzen. Gelangt das Fangloch 21 in Folge der Drehung der Antriebs-Scheibe 16 an die Position des Rastbolzens 30, so springt dieser durch die Kraft der Spiralfeder 34 getrieben in das Fangloch 21, so dass eine Drehmomentübertragung zwischen Antriebs-Scheibe 16 und Wischer-Welle 4 möglich ist.

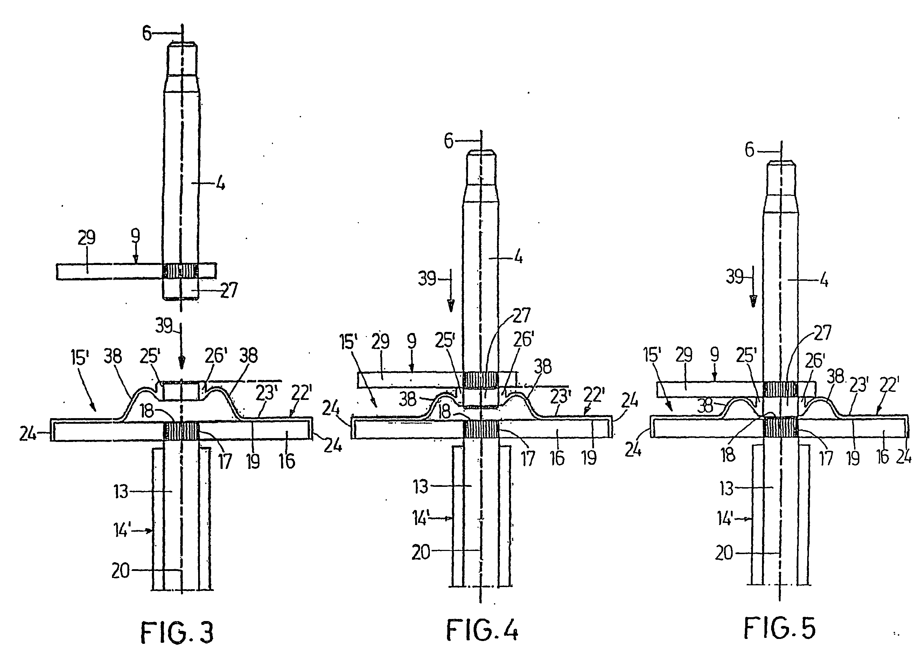

Im folgenden wird unter Bezugnahme auf die Figuren 3 bis 5 eine erfndungsgemäße Ausführungsform beschrieben. Identische Teile erhalten dieselben Bezugszeichen wie bei der ersten Ausführungsform, auf deren Beschreibung hiermit verwiesen wird. Konstruktiv unterschiedliche, jedoch funktionell gleichartige Teil erhalten dieselben Bezugszeichen mit einem hochgesetzten Strich. Der zentrale Unterschied gegenüber der ersten Ausführungsform besteht in der Ausgestaltung des Kupplungs-Teils 15' und insbesondere des Zentrier-Aufsatzes 22'. Wie bei der ersten Ausführungsform weist das Kupplungs-Teil 15' ein Fangloch 21 auf, das mit dem den Rastbolzen 30 aufweisenden Kupplungs-Teil 9 zur Drehmomentübertragung zusammenwirkt. Diese sind jedoch in der in den Figuren 3 bis 5 dargestellten Ansicht nicht gezeigt. Der Zentrier-Aufsatz 22' weist in der in Figur 3 dargestellten Öffnungsstellung der Scheibe 2 einen ringförmigen, auf der Antriebs-Scheibe 16 aufliegenden Teil 23' auf, der in Richtung auf die Achse 20 in einen gegenüber der Antriebs-Scheibe 16 in Richtung auf das Wellen-Ende 27 vorstehenden federnden Ring 38 übergeht. Der Ring 38 geht in Richtung auf die Achse 20 in den als Muffe ausgebildeten Ring 26' über. Der Seitensteg 24, der Teil 23', der Ring 38 sowie der Ring 26' sind einteilig miteinander ausgebildet und bestehen aus einem elastischen Kunststoff. Der Ring 26' ist in Einschub-Richtung 39 an die Antriebs-Scheibe 16 elastisch andrückbar, wobei mit zunehmender Annäherung des Rings 26' an die Antriebs-Scheibe 16 die von dem Federring erzeugte Gegenkraft größer wird.

Im folgenden wird das Schließen der Scheibe 2 von der Öffnungstellung in die Schließstellung beschrieben. Beim Schließen der Scheibe 2 wird die Wischer-Welle 4 entlang der Einschub-Richtung 39 verschoben, bis das Wellen-Ende 27 mit der Zentrier-Aufnahme 25' in Eingriff kommt. Bei einer weiteren Verschiebung der Wischer-Welle 4 entlang der Einschub-Richtung 39 erhöht sich die Anliegekraft, mit der der Ring 26' gegen den Tragarm 29 gedrückt wird. Auf diese Weise wird zusätzlich zur radialen Zentrierung beim ersten Ausführungsbeispiel sichergestellt, daß auch bei axialen Positionierungsschwankungen der Wischer-Welle 4 immer eine perfekte, in axialer Richtung spielfreie Verbindung zwischen dem Wellen-Ende 27 und der Zentrier-Aufnahme 25' besteht. Insbesondere bei einer nicht vollständigen Annäherung des Wellen-Endes 27 an das Ende 18 der Antriebs-Welle 13 wird, wie in Figur 4 dargestellt, eine perfekte Verbindung zwischen dem Wellen-Ende 27 und dem Ring 26' sichergestellt.

## Patentansprüche

1. Wischanlage zum Wischen einer, insbesondere an einem Kraftfahrzeug, bewegbaren Scheibe (2)
a) mit einem drehantreibbaren ersten Kupplungs-Teil (15') zur Verbindung mit einer einer stationären Motor-Getriebe-Einheit (10) nachgeordneten, drehantreibbaren Antriebs-Welle (13), wobei das erste Kupplungs-Teil (15') eine Antriebs-Scheibe (16) aufweist,
b) mit einem zweiten Kupplungs-Teil (9), welches
i) mit einer Wischer-Welle (4) zum Antrieb eines Wischers verbunden ist,
ii) gemeinsam mit der Scheibe (2) bewegbar ist und
iii) mit dem ersten Kupplungs-Teil (15') in drehmomentübertragender Weise in Eingriff bringbar ist und
c) mit einer Zentrier-Einrichtung zur Zentrierung der Wischer-Welle (4) in Bezug auf die Antriebs-Welle (13), wobei die Zentrier-Einrichtung
i) mit dem ersten Kupplungs-Teil (15') und/oder dem zweiten Kupplungs-Teil (9) verbunden ist,
ii) zumindest teilweise elastisch ausgebildet ist und
iii) aus Kunststoff besteht,
**dadurch gekennzeichnet, dass**
d) auf der dem zweiten Kupplungs-Teil (9) zugewandten Seite (19) der Antriebs-Scheibe (16) ein Zentrier-Aufsatz (22') angeordnet ist,
i) der eine mittig angeordnete Zentrier-Aufnahme (25') zum Eingriff mit der Wischer-Welle (4) aufweist, und
ii) von dem zumindest ein Teil federnd in Richtung auf die Antriebs-Scheibe (16) andrückbar ist,
iii) wobei die Zentrier-Aufnahme (25') über einen federnden Ring (38) mit der Antriebs-Scheibe (16) verbunden ist.

2. Wischanlage gemäß Anspruch 1, **dadurch gekennzeichnet, dass** die Antriebs-Scheibe (16) und der Zentrier-Aufsatz (22') durch Zwei-Komponenten-Spritzgießen von Kunststoff hergestellt sind.

3. Wischanlage gemäß Anspruch 1 oder 2, **dadurch gekennzeichnet, dass** die Antriebs-Scheibe (16) ein Fangloch (21) aufweist.

4. Wischanlage gemäß einem der Ansprüche 1 bis 3, **dadurch gekennzeichnet, dass** der Zentrier-Aufsatz (22') die Wand des Fanglochs (21) bedeckt.

## Claims

1. Wiper system for wiping a moveable window (2), in particular on a motor vehicle,
a) with a rotationally driveable first coupling part (15') for connection to a rotationally driveable drive shaft (13) arranged downstream of a stationary motor/gear unit (10), the first coupling part (15') having a driving disc (16),
b) with a second coupling part (9) which
i) is connected to a wiper shaft (4) for driving a wiper,
ii) is moveable together with the window (2) and
iii) can be brought into engagement in a torque-transmitting manner with the first coupling part (15'), and
c) with a centring device for centring the wiper shaft (4) with respect to the drive shaft (13), the centring device
i) being connected to the first coupling part (15') and/or to the second coupling part (9),
ii) being of at least partially elastic design and
iii) being composed of plastic,
**characterized in that**
d) a centring attachment (22') is arranged on that side (19) of the driving disc (16) which faces the second coupling part (9), which centring attachment
i) has a centrally arranged centring receptacle (25') for engagement with the wiper shaft (4), and
ii) at least part of which can be pressed resiliently in the direction of the driving disc (16),
iii) the centring receptacle (25') being connected to the driving disc (16) via a resilient ring (38).

2. Wiper system according to Claim 1, **characterized in that** the driving disc (16) and the centring attachment (22') are produced from plastic by two-component injection moulding.

3. Wiper system according to Claim 1 or 2, **characterized in that** the driving disc (16) has an intercepting hole (21).

4. Wiper system according to one of Claims 1 to 3, **characterized in that** the centring attachment (22') covers the wall of the intercepting hole (21).

## Revendications

1. Installation d'essuie-glace, notamment pour une vitre (2) de véhicule automobile, comprenant :
a) une première partie d'accouplement (15') entraînée en rotation pour être reliée à un arbre d'entraînement (13) entraîné en rotation, par un groupe moteur-transmission (10) fixe, la première partie d'accouplement (15') ayant un disque d'entraînement (16),
b) une seconde partie d'accouplement (9)
i) reliée à un arbre d'essuie-glace (4) pour entraîner l'essuie-glace,
ü) mobile avec le disque (2), et
iii) pouvant être mise en prise avec la première partie d'accouplement (15') de manière à transmettre le couple et
c) une installation de centrage pour centrer l'arbre d'essuie-glace (4) par rapport à l'arbre d'entraînement (13), cette installation de centrage étant
i) reliée à la première partie d'accouplement (15') et/ou la seconde partie d'accouplement (9'),
ii) réalisée au moins en partie élastiquement et
iii) en matière plastique,
**caractérisée en ce que**
d) le côté (19) du disque d'entraînement (16) tourné vers la seconde partie d'accouplement (9) comporte un chapeau de centrage (22'), qui
i) a en son milieu un logement de centrage (25') pour venir en prise avec l'axe d'essuie-glace (4) et
ii) peut être poussé par au moins une pièce, de manière élastique en direction du disque d'entraînement (16),
iii) le logement de centrage (25') étant relié au disque d'entraînement (16) par une bague élastique (38).

2. Installation d'essuie-glace selon la revendication 1,
**caractérisée en ce que**
le disque d'entraînement (16) et le chapeau de centrage (22') sont fabriqués en matière plastique par un procédé d'injection à deux composants.

3. Installation d'essuie-glace selon la revendication 1 ou 2,
**caractérisée en ce que**
le disque d'entraînement (16) comporte un orifice de réception (21).

4. Installation d'essuie-glace selon l'une des revendications 1 à 3,
**caractérisée en ce que**
le chapeau de centrage (22') couvre la paroi de l'orifice de réception (21).
